# EUROPEAN PATENT APPLICATION

(11) **EP 1 058 361 A1**
(43) Date of publication of application: **06.12.2000**
(21) Application number: 00830301.8
(22) Date of filing: 20.04.2000
(51) Int. Cl.: H02G 1/08, H01B 13/00

(54) **An enhanced probe for introducing conductor wires into pipes of electrical and telephonic systems and device for its manufacture**

(30) Priority: 03.06.1999 IT RM990356
(71) Applicant: Masini, Daniele, 55010 Lucca (IT)
(72) Inventor: Masini, Daniele, 55010 Lucca (IT)
(74) Representative: Lanzoni, Luciano

(57) **Abstract**

An enhanced probe (1) for introducing conductor wires into pipes of electrical, telephonic, alarm systems and the like, comprises a wire (2), preferably made of nylon, a flexible prod (3) serving as a bend-guide situated at an extremity of the wire (2) and an eyelet (4) for pulling the conductor wires situated at the other extremity; the wire (2) is graduated by means of the incision of metric references (Ml-Mn) measuring the distance from one extremity, preferably the one bearing the prod (3) and the metric references (Ml-Mn) are indelibly coloured; moreover, the prod (3) and the eyelet (4) have no edges.

## Description

The present invention relates to an enhanced probe of the type used to insert conductor wires into the interior of pipes or ducts of electrical, telephonic, alarm systems and the like. The invention further relates to a device able to manufacture said enhanced probe.

It is well known that, to introduce wires into the pipes of an electrical, telephonic, alarm systems or the like, probes (or guide-wires) are used, constituted by a steel ribbon or cable or by a nylon wire, with a diameter of a few millimetres, having at one extremity a bend-guide prod and at the other an eyelet for pulling the wires. To connect two points in the system, the probe is introduced into the pipe or duct circuit in correspondence with one of the two points - for instance, in correspondence with a first junction box - and thrust until the prod exits in correspondence with a second box or connector block. Once the end of the wires has been fastened to the eyelet provided at the extremity of the probe opposing the prod, the probe is retrieved from the exit point of the prod, thereby completing the positioning of the wires.

The probes described above do not enable to know, other than in a very imprecise manner, what length of wires is necessary for each connecting operation between two points of the circuit. This entails the need to prepare a bundle of adequate length for each wire or to extract the probe, proceed with measuring the segment inserted between the points to be collected, and then prepare the wires of the necessary length.

An additional drawback of known probes is that they have edges which make it difficult both to insert them into and extract them from the pipes.

The main aim of the present invention therefore is to provide an enhanced probe which allows, once it has been inserted between two points of the set of pipes of an electrical, telephonic, alarm system or the like, to know exactly the length of the necessary segment of conductor wire.

A second aim of the invention is to provide a probe that meets a minimal resistance inside the pipes of a system, both during the insertion and the extraction phase.

A further aim of the invention is to provide a particularly advantageous device for the manufacture of a probe suitable for the aforesaid main aim.

The invention, as it is characterised by the claims set out below, achieves the aforesaid aims.

The features and advantages of the present invention shall become more readily apparent from the detailed description that follows, made with reference to the accompanying drawings, which represent an embodiment provided purely by way of non limiting example, in which:
- Figure 1 schematically shows a probe in accordance with the invention;
- Figures 2 and 3 are lateral and frontal schematic views of a device for the manufacture of a probe in accordance with the invention;
- Figure 4 is a front view of the punching wheel comprised in the device of Figs. 2 and 3;
- Figure 5 shows an electromechanical circuit for controlling and commanding the device of Figs. 2 through 4.

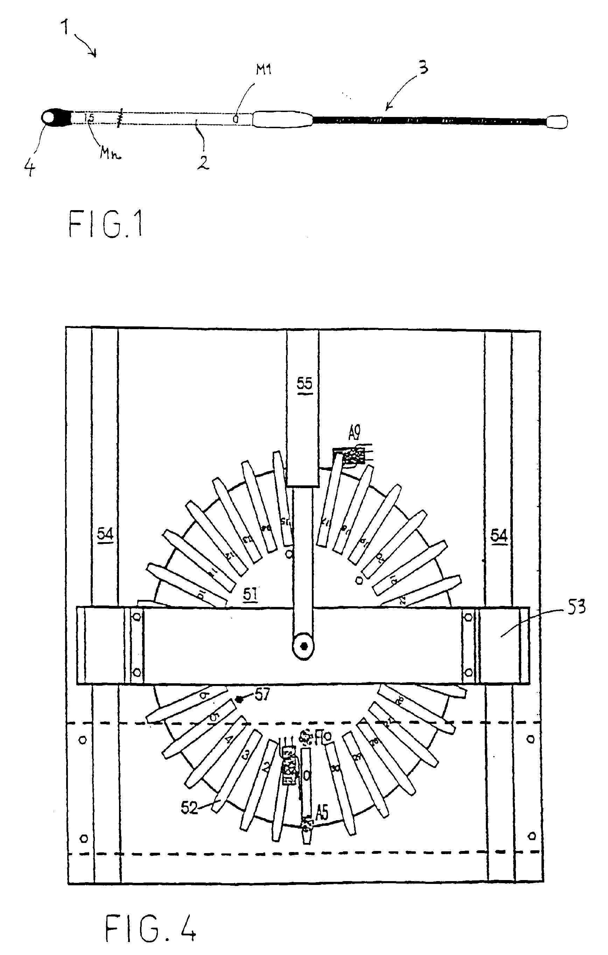

In accordance with Figure 1, a probe 1 for introducing conductor wires inside pipes of electrical, telephonic, alarm systems and the like, comprises a nylon wire 2, which may be provided with steel core, with a diameter of 3-10 mm and length of 5-50 m, a flexible prod 3 serving as a bend-guide situated at an extremity of the wire 2 and an eyelet 4 for pulling the conductor wires situated at the other extremity. In accordance with the invention, the wire 2 is graduated by means of the incision of metric references M1-Mn measuring the distance from an extremity, preferably the one bearing the prod. Advantageously, said metric reference M1-Mn are coloured in an indelible manner.

With this effective expedient, once the probe has been introduced between two points of the circuit, an immediate and precise information is obtained about the necessary length of conductor wire, simply by reading the first metric values appearing on the portion of the probe remaining outside the circuit.

In order to facilitate as much as possible to travel of the probe inside the pipes of the systems, neither the flexible prod 3 nor the eyelet 4 have any edges.

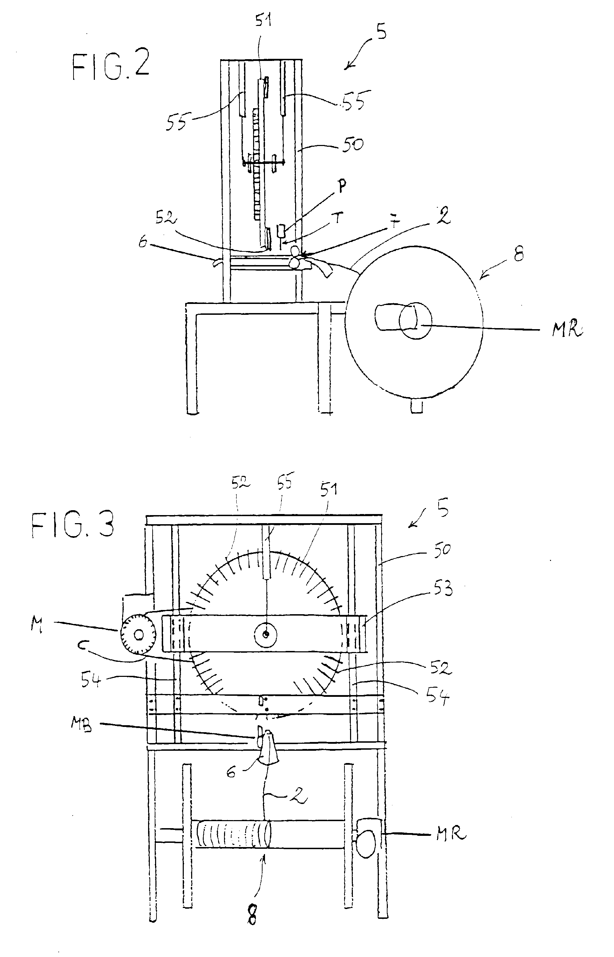

Figures 2 through 4 show a particularly effective device 5 for manufacturing a probe in accordance with the invention and in particular to graduate a wire made of nylon or other suitable material. Said device 5 comprises a frame 50 for supporting a wheel 51, rotating about a horizontal axis, movable vertically and bearing on the circumference a plurality of punches 52 for impressing the metric references on the wire 2. More specifically the wheel 51 is pivoted to a slider 53, movable along the two vertical guides 54 and subject to the action of a pair of pneumatic jacks 55. The rotation of the wheel 51 is obtained by means of an electric motor M and a belt C. The punches 52 bear progressive numbers and are positioned equidistantly along the circumference of the wheel 51.

Underlying the wheel 51 and the punches 52 is provided a guide 6 inside which slides the nylon wire 2. The sliding of the wire is obtained by means of a pair of driving rollers 7 - actuated by a motor MB - which draw the wire from a spool 8, possibly actuated by a motor MR.

A cutting organ T, commanded by a pneumatic piston P, is provided in front of the wheel 51 in the direction of sliding of the wire 2.

The punching of the wire is achieved by making the wire 2 advance along the guide 6 for pre-set segments (for instance of one metre), lowering the wheel 51 to bring a punch 52 in contact with the surface of the wire 2, raising the wheel again and subsequently making it rotate until bringing the subsequent punch in marking position. Once the required length of graduated wheel is obtained, the wire is cut.

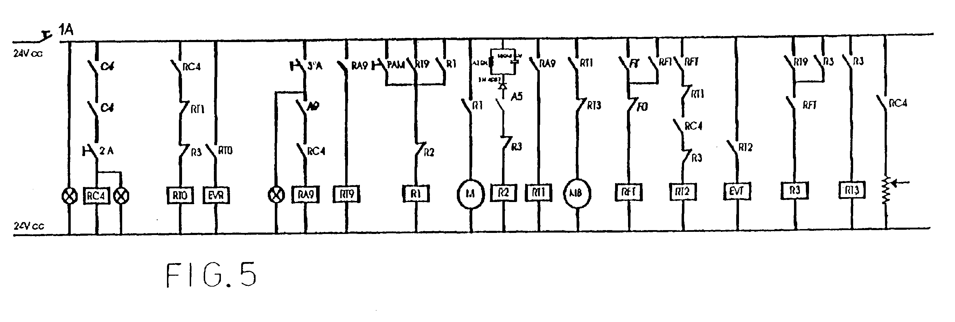

Figure 5 schematically shows an example of electromechanical circuit suitable for controlling the system and whose operation is substantially described hereafter.

Once the master switch 1A is closed and, if need be, the wheel 51 is brought back to the zero position by repeatedly acting on the push-button PAM, the probe is inserted into the guide 6 to activate a pair of sensors C4 provided thereon. To proceed with the punching operation, it is necessary to close the switch 2A and power a relay RC4 which, with one of its contacts, energises the cyclic timed relay RT0 for activating the solenoid valves EVR commanding the jacks 55, with the subsequent execution of the first marking operation.

Following the closure of the switch 3A, with the detection of the raised position of the wheel by a limit switch A9, the relay RA9, the timed relay RT9, the relay R1 are activated, and hence the motor M which causes the wheel 51 to rotate. The advance of the motor M is interrupted, when the next punch is in strike position, by the opening of a normally closed contact of a relay R2 commanded by a proximity switch A5 positioned on the strike axis, which detects the presence of a metal locator positioned on each punch 52.

The activation of the relay RA9 also determines the activation of an additional time relay RT1 which causes the temporary activation of the motor MB and the subsequent sliding of the wire 2. At the end of the activation of the motor MB, an n.c. contact RT1 positioned on the power supply of RT0 allows to the same relay to complete its cycle.

With the descent of the wheel 51 for the strike by means of EVR, the limit switch A9 is opened, which by opening the power supply circuit of RA9 and RT1 cancels all their functions. The return upwards of the wheel 51 instead causes the closure of A9 and the repetition of the advance cycle of the motors M and MB.

Once the required length of the wire (or equivalently the required numbered punch) is reached, by means of a limit switch FT - activated by a metal locator 57 fastened onto the wheel 51 in correspondence with the pre-set numbered punch - a relay RFT is energised, which powers the timed relay RT2. Its purpose is to activate a solenoid valve EVT commanding the pneumatic piston P and the cutting organ T. At the same time, the last punching activated by RT0 takes place.

Subsequently, with A9 closed and RFT energised, the relay R3 is closed by means of the contact RT9. The relay R3 serves the purpose of opening an n.c. contact to exclude the relay R2, a further n.c. contact to exclude RT0 and RT2 and an n.o. contact to activate the delayed-opening timed relay RT3 which activates the motor MB for a sufficient time to make the wire slide for a short segment (for instance, 10 cm). At the same time the motor M remains in the activated state, with the consequent rotation of the wheel and exclusion of the limit switch A5, until reaching a zero marking, which activates a limit switch F0 which de-energises the relays RFT and R3, thereby enabling the next punching cycle to start from the initial point.

It is evident that, by varying the number of punches, it is possible to graduate, with varying intervals, wires with different length and that the functions performed by the circuit described above can be performed by any suitable electronic circuit.

The invention thus conceived can be subject to numerous modifications and variations, without thereby departing from the scope of the inventive concept. Moreover, all components can be replaced by technically equivalent elements.

## Claims

1. An enhanced probe (1) for introducing conductor wires inside pipes of electrical, telephonic, alarm systems and the like, comprising a wire (2), preferably made of nylon, a flexible prod (3) serving as a bend-guide positioned at an extremity of the wire (2) and an eyelet (4) for pulling the conductor wires positioned at the other extremity, characterised in that said wire (2) is graduated by means of the incision of metric references (M1-Mn) measuring the distance from an extremity, preferably the one bearing the prod (3).

2. A probe as claimed in claim 1, characterised in that said metric references (M1-Mn) are coloured in an indelible manner.

3. A probe as claimed in claim 1, characterised in that said prod (3) and said eyelet (4) have no edges.

4. A device for graduating the wire (2) of a probe (1) as claimed in one of the previous claims characterised in that it comprises a frame (50) for supporting a wheel (51), rotating about a horizontal axis, movable vertically and bearing on the circumference a plurality of punches (52) for the impression of the metric references (M1-Mn) on the wire (2).

5. A device as claimed in claim 4, characterised in that said wheel (51) is pivoted to a slider (53), movable along vertical wheels (54) and subject to the action of one or more pneumatic jacks (55), the rotation of the wheel (51) being obtained by means of an electric motor (M) and transmission means (C).

6. A device as claimed in claim 4, characterised in that said punches (52) bear progressive numbers and are positioned equidistant along the circumference of the wheel (51).

7. A device as claimed in claim 4, characterised in that, underlying said wheel (51) and said punches (52) a guide (6) is provided, within which the wire (2) slides, the sliding being obtained by means of a pair of motorised driving rollers (7) which draw the wire from a spool (8).

8. A device as claimed in claim 4, characterised in that it comprises means (P, T) for cutting the wire (2).

9. A device as claimed in one of the claims from 4 to 8, characterised in that it comprises an electromechanical or electronic which cyclically controls the following phases:
- advancing the wire (2) along the guide (6) for pre-set segments;
- rotating the wheel (51) in such a way as to bring each punch (52) in strike position;
- lowering the wheel (51) with subsequent marking of the wire (2);
- cutting the graduated wire (2) to the pre-set measure.
